## Europäisches Patentamt
## European Patent Office
## Office européen des brevets

(11) Veröffentlichungsnummer: **0 133 239 B1**

# EUROPÄISCHE PATENTSCHRIFT

(45) Veröffentlichungstag der Patentschrift: **11.07.90**

(51) Int. Cl.⁵: **C 04 B 40/02, B 01 J 3/04**

(21) Anmeldenummer: **84108386.8**

(22) Anmeldetag: **17.07.84**

(54) **Verfahren zum Härten von Formkörpern aus bindemittelhaltigen Baustoffen und Autoklav zur Durchführung des Verfahrens.**

(30) Priorität: **22.07.83 DE 3326492**

(43) Veröffentlichungstag der Anmeldung:
**20.02.85 Patentblatt 85/08**

(45) Bekanntmachung des Hinweises auf die Patenterteilung:
**11.07.90 Patentblatt 90/28**

(84) Benannte Vertragsstaaten:
**AT BE CH DE FR GB IT LI LU NL SE**

(56) Entgegenhaltungen:
**DE-A-1 927 127**
**DE-B-1 646 444**
**DE-B-2 137 522**
**FR-A- 750 606**
**GB-A-1 379 472**
**US-A-1 415 623**
**US-A-2 929 151**

(73) Patentinhaber: **SICOWA Verfahrenstechnik für Baustoffe GmbH & Co. KG**
**Handerweg 17**
**D-5100 Aachen (DE)**

(72) Erfinder: **Schulz, Eckhard**
**Lilienstrasse 10**
**D-4512 Wallenhorst 1 (DE)**

(74) Vertreter: **Sparing Röhl Henseler Patentanwälte**
**European Patent Attorneys**
**Rethelstrasse 123**
**D-4000 Düsseldorf 1 (DE)**

Courier Press, Leamington Spa, England.

**Beschreibung**

Die Erfindung betrifft ein Verfahren zum Härten von Formkörpern aus bindemittelhaltigen Baustoffen im Innern eines Druckbehälters eines Autoklaven, der mit einem gasförmigen Medium beschickt wird, dessen Temperatur in einer Aufheizphase auf einen vorgegebenen oberen Endwert erhöht, in einer zumindest bis zum Erreichen einer vorbestimmten Ausgleichstemperatur im Innern der Formkörper dauernden Haltephase aufrechterhalten und in einer anschließenden Abkühlungsphase durch Druckminderung auf Ausstoßtemperatur herabgesetzt wird.

Bei bekannten Verfahren dieser Art wird die zum Härten benötigte Wärme den zu härtenden Formkörpern durch gesättigten Dampf zugeführt, der in den Druckbehälter des Autoklaven eingeleitet wird. Die Wärmezufuhr durch Dampfeinleitung beschränkt sich dabei im wesentlichen auf die Aufheizphase, während in der Haltephase eine Wärmezufuhr durch Einleiten weiteren Dampfes nur noch in jenem Umfange erfolgt, wie es zur Aufrechterhaltung der vorbestimmten oberen Endtemperatur des gesättigten Dampfes angesichts eintretender geringfügiger Wärmeverluste des Druckbehälters erforderlich ist. Die Länge der Haltephase hängt von dem verwendeten Baustoff sowie dabei von der Zeit ab, innerhalb der im Innern der Formkörper die zur Härtung erwünschte Ausgleichstemperatur erreicht wird. Beim Autoklavieren z.B. von Silikatbaustoffen liegt die Ausgleichstemperatur bei ca. 156°C, und die obere Endtemperatur des gesättigten Dampfes beträgt bei einem Sättigungsdruck von 16 bar 203°C. Ist nach Erreichen der Ausgleichstemperatur die Härtung abgeschlossen, schließt sich an die Haltephase eine Abkühlungsphase an, in der der Dampfdruck fortlaufend, in der Regel linear, bis auf Umgebungsdruck herabgesetzt wird. Danach werden die Formkörper aus dem Druckbehälter entfernt und stehen nach vollständiger Abkühlung auf Umgebungstemperatur zur weiteren Verwendung zur Verfügung.

Bei derartigen Härteverfahren erreichen Formkörper aus schweren Baustoffen in der Regel befriedigende Festigkeitswerte bei einem Wassergehalt in der Größenordnung von etwa 3 bis 5 Vol.-%. Diese Größenordnung entspricht dem Ausgleichswert des Wassergehalts der Formkörper in Mauerwerken.

Werden nach derartigen Härteverfahren jedoch Formkörper aus leichten Baustoffen wie insbesondere porosierte Silikate oder porosierte Betone gehärtet, so ist festzustellen, daß diese den Druckbehälter des Autoklaven mit einem in der Größenordnung von etwa 20 Vol.-% liegenden Wassergehalt verlassen, der nicht nur die Festigkeit der Formkörper beeinträchtigt, sondern auch deren Gewicht erhöht und deren Wärmedämmeigenschaften herabsetzt. Erst nach einer langen Trockenzeit, in der Regel in bereits vermauertem Zustand, erreichen Formkörper aus solchen Leichtbaustoffen ihre Ausgleichsfeuchte von etwa 3 bis 5 Vol.-%, was zur Folge hat, daß erhebliche zusätzliche Heizkosten für die Mauerwerkstrocknung aufzuwenden sind, bis die Formkörper ihre Ausgleichsfeuchte und damit ihre vollen Festigkeits- und Wärmedämmeigenschaften erreichen. Da die Formkörper bei einem solchen Trocknungsvorgang einer recht erheblichen Schwindung unterliegen, sind ferner in Bauten Rißbildungen zu erwarten.

Der hohe Wassergehalt von Formkörpern aus Leichtbaustoffen, insbesondere porosierten Leichtbaustoffen, beim Verlassen des Autoklaven liegt darin begründet, daß die durch Anmachwasser mit einem hohen Wassergehalt vorbelasteten Formkörper während des Härteverfahrens weiterhin Wasser durch Kondensation des Dampfes an den kondensationsfähigen Flächen des Formkörpers aufnehmen, die gerade bei porosierten Leichtbaustoffen stark vergrößert sind. Das in den Formkörpern enthaltene Wasser verbleibt in den Formkörpern in nahezu vollem Umfang, da der Wärmeinhalt in Formkörpern aus Leichtbaustoffen nicht ausreicht, um innerhalb der Abkühlungsphase eine nennenswerte Senkung des Wassergehalts durch Verdampfung herbeizuführen.

Zur Senkung des Wassergehalts fertiggehärteter Formkörper aus Leichtbaustoffen ist bereits vorgeschlagen worden, die Formkörper vor der Härtebehandlung im Autoklaven einer Vakuumtrocknung zu unterziehen. Diese hat jedoch einen relativ schlechten Wirkungsgrad und führt ferner nicht zu befriedigenden Ergebnissen, weil die Formkörper in erheblichem Umfang Kondensatwasser beim Härtevorgang in der gesättigten Dampfatmosphäre aufnehmen. Überdies ist dieses Verfahren von der Energiebilanz wie auch von der Gerätetechnik her aufwendig.

Aus der DE-B-1 646 444 ist ein Verfahren zum Verbessern der mechanischen Eigenschaften von Betonformkörpern bekannt, bei dem diese unter Verwendung der geringstmöglichen Menge an Anmachwasser aus Mörteln hergestellt, ohne Verdampfung des Wassers bis auf eine Temperatur wenig unterhalb des Wassersiedepunkts erhitzt werden, worauf unter weiterer Temperaturerhöhung bis über den Siedepunkt des Wassers das nicht gebundene Wasser verdampft wird. Das Erhitzen kann mit heißem Wasser oder mit Dampf unter Atmosphärendruck oder einem gegenüber diesem erhöhten Druck vorgenommen werden. Das Verdampfen des Wassers kann durch Erhitzung im offenen Raum oder durch das Einleiten von erhitzter Luft in eine Dampfkammer geschehen. Für die hier angesprochenen Formkörper aus schweren Baustoffen, die zudem mit einer sehr geringen Wassermenge angemacht wurden, kann diese Entwässerung hinreichend sein, jedoch nicht bei Formkörpern aus leichten und insbesondere porosierten Baustoffen.

Aufgabe der Erfindung ist es daher, ein Verfahren der eingangs genannten Art zu schaffen, das einfach ist und mit gutem Wirkungsgrad sowie energiegünstig arbeitet und mit dem Formkörper aus bindemittelhaltigen Baustoffen, insbesondere auch aus porosierten Leichtbaustoffen, härtbar und dabei auf einen nur noch 3 bis 5 Vol.-% betragenden Wassergehalt einstellbar ist.

Diese Aufgabe wird dadurch gelöst, daß das Heizmedium nach Erreichen der Ausgleichstemperatur im Innern der Formkörper in einer sich an die Haltephase anschließenden und der Abkühlungsphase vorausgehenden Zwischenphase über den Ausgleich von Wärmeverlusten hinausgehend und eine Temperatur oberhalb der Verdampfungstemperatur des Wassers einnehmend beheizt und dabei durch geregeltes Abblasen von wasserdampfhaltigem Heizmedium aus dem Innern des Druckbehälters ein Ansteigen der Temperatur des Heizmediums über den vorgegebenen oberen Endwert unterbunden wird.

Der insbesondere bei porosierten Leichtbaustoffen auftretende hohe Wassergehalt wird durch eine in das Härteverfahren integrierte Zwischenphase zum Trocknen reduziert, nämlich durch eine Zufuhr von Wärme in einer besonderen phase, wodurch den Formkörpern jene Menge an Wärme zugeführt wird, die zur Verdampfung des in den Formkörpern enthaltenen Wassers bis auf den gewünschten Restwassergehalt benötigt wird. Die dabei angesichts des Sättigungszustandes des Dampfes im Druckbehälter des Autoklaven an sich zu erwartende Temperatursteigerung wird durch Abblasen von Dampf unterbunden, und die mit dem Abblasen von Dampf an sich verbundene Störung des Gleichgewichts von im Druckbehälter des Autoklaven vorliegendem Wasser und Dampf wird durch Verdampfung von Wasser aus den Formkörpern ständig wieder ausgeglichen. Auf diese Weise wird auf verfahrenstechnisch ebenso wie vorrichtungstechnisch einfachem Wege die Herstellung von Formkörpern mit dem gewünschten niedrigen Wassergehalt bei Verlassen des Druckbehälters des Autoklaven gesichert. Das Verfahren ist dabei sehr genau steuerbar und erreicht einen vorzüglichen Wirkungsgrad, während gleichzeitig vorhandene Autoklaven Verwendung finden können und nur relativ geringfügiger Umbauten bedürfen, um für die Durchführung des erfindungsgemäßen Verfahrens einsetzbar zu sein.

Der Autoklav bedarf lediglich einer diesem zugeordneten Heizvorrichtung, die beispielsweise im Autoklaven angeordnet ist und das im Autoklaven eingeschlossene Heizmedium aufheizt. Es ist aber auch möglich, heißes Gas in den Druckbehälter des Autoklaven einzudrücken, sei es, daß dieses als Heißgas außenseitig generiert und direkt eingepumpt wird, sei es, daß von außen angesaugtes oder aber in einem Kreislauf durch den Autoklaven geführtes Gas aufgeheizt wird, beispielsweise über außenseitige Wärmetauscher.

Ferner bedarf der Druckbehälter des Autoklaven allenfalls noch eines Dampfdruck-Regelventils mit vorgebbarer Regelcharakteristik in einer Ausblasleitung, die im allgemeinen bei herkömmlichen Autoklaven ohnehin bereits vorhanden ist. Mit Hilfe eines derartigen Regelventils kann während der Wärmezufuhr infolge des Beheizens in der Zwischenphase dem Dampf ein Temperatur/Druck-Verlauf vorgegeben werden, der eine verdampfungs- und energieoptimierte Behandlung der Formkörper gewährleistet.

Grundsätzlich ist es möglich, bei dem Verfahren nach der Erfindung die Wärmezufuhr in der Aufheizphase nach wie vor durch Einleiten von Dampf in den Druckbehälter des Autoklaven vorzunehmen und lediglich die Wärmezufuhr nach Erreichen der oberen Endtemperatur durch Beheizung des Innern des Druckbehälters herbeizuführen. Bevorzugt ist jedoch ein Verfahrensablauf, bei dem die gesamte Wärmezufuhr während des Härteverfahrens auf dem Wege der Druckbehälterbeheizung erfolgt, da hierbei die Wärmezufuhr besonders feinfühlig dosierbar und dabei mit geringerem Bauaufwand realisierbar ist. Werden dabei Formkörper gehärtet, die insbesondere in der Aufheizphase Gefahr laufen, durch Verdampfung des in ihnen enthaltenen Wassers Risse zu bilden oder Oberflächenbeschädigungen zu erleiden, so kann solchen Erscheinungen dadurch entgegengewirkt werden, daß man zu Beginn der Aufheizphase eine geringe Menge an Wasser in den Druckbehälter einführt, das durch die Heizungswirkung relativ schnell in gesättigten Dampf übergeht und einer vorzeitigen Verdampfung von Wasser aus den Formkörpern entgegenwirkt.

Durch Abblasen von wasserdampfhaltigem Heizmedium kann der Druck im Innern des Druckbehälters auf einem konstanten, dem Sättigungsdruck zum vorgegebenen oberen Endwert der Temperatur des Dampfes entsprechenden Wert gehalten werden.

Durch Abblasen von wasserdampfhaltigem Heizmedium aus dem Innern des Druckbehälters kann der Druck des Dampfes in der Zwischenphase stufenweise oder kontinuierlich höchstens bis auf einen Wert herabgesetzt werden, der dem Sättigungsdruck bei einer Dampftemperatur vom Wert der Ausgleichstemperatur entspricht.

Ferner kann es zweckmäßig sein, daß das gasförmige Heizmedium dem Autoklaven vor oder während der Aufheizphase mit einem Druck und einer Temperatur, bei dem es unter der Verdampfungstemperatur des Wassers nach der Dampfdruckkurve verbleibt, zugeführt und der Druck während der Aufheizphase und der nachfolgenden Haltephase so weit erhöht bzw. aufrechterhalten wird, daß die Temperatur des Heizmediums die Verdampfungstemperatur des Wassers bei dem jeweiligen Temperatur-Druck-Zustand nicht überschreitet.

Hierbei kann als Heizmedium beispielsweise Umgebungsluft verwendet werden. Indem durch eine vorangehende oder mitgeführte Druckbeaufschlagung des Autoklav-Druckbehälters sichergestellt wird, daß im Innern auch beim Hochfahren der Temperatur über die erforderliche Ausgleichstemperatur hinaus bis zu einem vorgegebenen oberen Endwert die druckabhängige Verdampfungstemperatur des Wassers nicht erreicht wird, lassen sich nachteilige Folgen der Arbeit mit Dampf vermeiden. Hierbei werden die Formkörper in der Aufheizphase nicht einem Naßdampf ausgesetzt, der sich an den noch kälteren Formkörpern niederschlägt und sich in diesen als Niederschlagswasser zusätzlich zu dem ursprünglichen Anmachwasser aus der Formung festsetzt, womit sich ein über den Bedarf für den chemischen Härtevorgang weit hinausgehender Wassergehalt ergibt.

Hierbei wird ein zusätzlicher Druck benötigt, der bereits mit einem Anfangsdruck von 9 bar oder mehr auf den Autoklaven gegeben werden kann, um dann nach dem Aufheizen bei einer erheblich oberhalb der Ausgleichstemperatur von z.B. 156° und mit einem Druck von 13 oder mehr bar einen unterhalb der Dampfdruckkurve liegenden Zustand des gasförmigen Heizmediums einzuhalten.

Der zusätzlich benötigte Druck kann auch stetig oder stufenweise mit dem Aufheizen aufgebracht werden. Dabei kann das Aufheizen im Autoklaven selbst erfolgen, und zwar mit einer an oder in diesem angebrachten Heizvorrichtung.

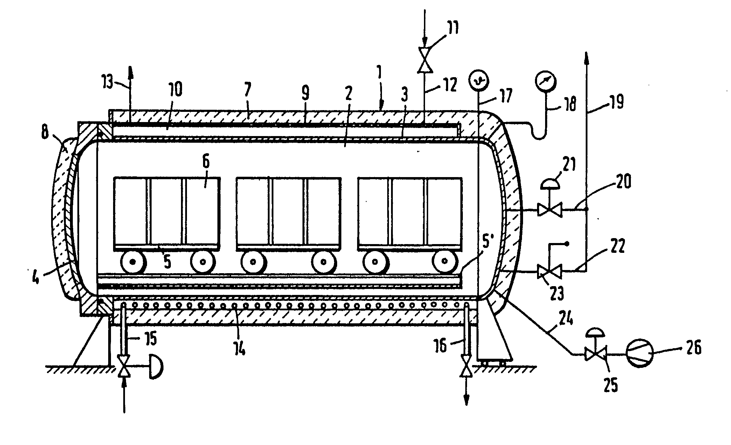

Die Erfindung wird nachstehend in Zusammenhang mit dem in der beigefügten Abbildung dargestellten Ausführungsbeispiel eines Autoklaven näher erläutert.

Der dargestellte Autoklav umfaßt einen wie üblich z.B. als liegender Zylinderkörper ausgeführten Druckbehälter 1, dessen Innenraum 2 durch eine Behälterwandung 3 umgrenzt ist. An einem Ende ist der Innenraum 2 des Druckbehälters 1 durch eine Kesselverschlußklappe 4 oder dergleichen zugänglich, die zum Einfahren von Trägerwagen 5 auf Schienen 5' mit einer Ladung aus Formkörpern 6 geöffnet und nach Beschicken des Innenraums 2 mit Formkörpern 6 druckdicht verschließbar ist.

An seinem gesamten Außenumfang ist der Druckbehälter 1 mit einer Isolierung 7 versehen, die üblicherweise auch im Bereich der Kesselverschlußklappe 4 vorgesehen und dort mit 8 bezeichnet ist.

Der Druckbehälter 1 kann in seiner oberen Hälfte zumindest bereichsweise als Doppelmantelbehälter ausgebildet sein, wobei zwischen den Behältermänteln 3 und 9 ein von einem Wärmeträgermedium durchströmbarer Zwischenraum 10 gebildet ist. Es versteht sich, daß bei einer derartigen Ausführung im Bereich der vorgesehenen Doppelwandigkeit der Druckbehälter 1 über seinen gesamten Umfang als Doppelmantelbehälter ausgebildet ist. Das Wärmeträgermedium, z.B. Thermoöl, kann in einer über ein Ventil 11 gesteuerten Form bei 12 in den Zwischenraum 10 eingeleitet werden und bei 13 aus diesem wieder austreten, um z.B. einen eine Wiederaufheizung des Wärmeträgermediums herbeiführenden, nicht dargestellten Wärmetauscher zu durchlaufen, bevor es dann wieder in den Zwischenraum 10 eintritt.

Stattdessen kann, wie das in der unteren Hälfte des Druckbehälters 1 veranschaulicht ist, als Heizvorrichtung auch ein Rohrschlangenheizkörper 14 vorgesehen sein, der auf dem (einzigen) Behältermantel 3 angeordnet und von der Isolierung 7 nach außen abgeschirmt sein kann. Dieser Rohrschlangenheizkörper 14 kann ebenfalls wiederum von einem Wärmeträgermedium durchflossen sein, das bei 15 zugeführt und bei 16 abgeführt wird.

Grundsätzlich ist es auch denkbar, z.B. einen solchen Rohrschlangenheizkörper im Innenraum 2 des Druckbehälters 1 anzuordnen. Schließlich ist es auch denkbar, anstelle von mit einem Wärmeträgermedium wie Thermoöl oder dergleichen arbeitenden Heizvorrichtungen eine elektrische Heizvorrichtung vorzusehen.

Der Druckbehälter 1 ist mit einem Fernthermometer 17, einem Manometer 18 sowie einer Dampfauslaßleitung 19 versehen, in deren Leitungsteil 20 ein Dampfdruck-Regelventil 21 eingeschaltet ist. In den Leitungsteil 22 ist ferner ein Sicherheitsventil 23 eingeschaltet.

Gemäß einer Verfahrensvariante kann nach Befüllen des Druckbehälters 1 mit Formkörpern 6 dem Innern 2 im Bedarfsfall eine gewisse Menge an Wasser zugeführt werden, wonach die Beheizung eingeschaltet wird. Durch die Erwärmung verdampft das zugeführte Wasser unter Bildung einer Dampfatmosphäre, die schon kurz nach Beginn der durch Einschalten der Beheizung eingeleiteten Aufheizphase in Sättigungszustand übergeht. Infolge der fortschreitenden Beheizung steigt die Temperatur auf einen vorgegebenen oberen Endwert, z.B. 203°C, an, der z.B. nach etwa 5 Stunden erreicht wird und infolge des Sättigungszustands des Dampfes mit einem Druckanstieg auf 16 bar einhergeht. Im Verlauf dieser Aufheizphase steigt auch die Temperatur der Formkörper, wobei allerdings die Ausgleichstemperature im Innern der Formkörper zeitlich der Oberflächentemperatur nachläuft. Da das Erreichen der Ausgleichstemperatur für eine durchgehende Härtung der Formkörper 6 maßgeblich ist, wird im Anschluß an die Aufheizphase die gewählte obere Endtemperatur eine Zeit lang auf konstanter Höhe gehalten, wobei sich die Zeitspanne für diese Haltephase nach Baustoff- und Formkriterien der Formkörper 6 bemißt und empirisch oder durch Messung ermittelt werden kann. In der Haltephase wird durch die Beheizung keine oder jedenfalls nur so viel Wärme noch dem Innern 2 des Druckbehälters 1 zugeführt, wie gerade benötigt wird, um die obere Endtemperatur des Dampfes aufrechtzuerhalten. Zur Vermeidung einer in der Haltephase unerwünschten Wärmezufuhr kann die Beheizung in der Haltephase mehr oder weniger abgeschaltet werden. Stattdessen ist es auch denkbar, das Wärmeträgermedium von einer Temperatur von beispielsweise anfänglich 250 bis 300°C auf eine Temperatur von annähernd 203°C herabzusetzen.

Im Anschluß an die Haltephase wird nun durch Beheizung dem Innern 2 des Druckbehälters 1 Wärme in einer Menge zugeführt, welche die zum Ausgleich von Wärmeverlusten des Druckbehälters 1 benötigte Wärmemenge erheblich übersteigt, um auf diesem Wege den Formkörpern 6 jene Wärme zuzuführen, die zum Verdampfen des in den Formkörper 6 mit einem Gehalt von z.B. 20 Vol.-% vorliegenden Wassers bis auf einen Restwassergehalt von z.B. 3 Vol.-% benötigt wird. In dieser Zwischenphase wird jedoch mit Hilfe des Dampfdruck-Regelventils 21 Dampf aus dem Innern 2 des Druckbehälters 1 ausgeblasen (z.B. einem nebenliegenden Druckbehälter 1 zugeführt), um auf diese Weise die Temperatur des Dampfes im Innern 2 des Druckbehälters 1 auf dem vorgegebenen oberen Endwert konstant zu halten. Das Dampfdruck-Regelventil 21 stellt dabei feinfühlig sicher, daß der Druck im Innern 2 des Druckbehälters 1 auf dem konstanten Wert von 16 bar bleibt.

Während die Haltephase z.B. 90 min dauert, kann die Zwischenphase z.B. 4 h betragen. Die Dauer dieser Zeitspanne hängt von einer Vielzahl von Faktoren ab und kann empirisch oder durch Messung des Wassergehalts in den Formkörpern ermittelt werden.

Hieran schließt sich nun die Abkühlungsphase an, in der beispielsweise innerhalb einer Zeitspanne von weiteren 90 min der Druck linear von 16 bar auf Umgebungsdruck herabgesetzt wird. Dabei nimmt die Temperatur des gesättigten Dampfes von der oberen Endtemperatur, z.B. 203°C, auf etwa 75°C ab, und die Formkörper werden alsdann aus dem Druckbehälter 1 ausgetragen.

Anstelle des Haltens der Temperatur des Dampfes im Innern des Druckbehälters 1 auf oberer vorgegebener Endtemperatur während der Zwischenphase ist es auch möglich, nach Erreichen der Ausgleichstemperatur im Innern der Formkörper 6 Dampf derart aus dem Innern des Druckbehälters 1 abzublasen, daß der Druck des Dampfes sich kontinuierlich oder in Stufen vermindert. Auf diese Weise kann der Verdampfungsvorgang des Wassers aus den Formkörpern gesteuert werden, wenn sich z.B. ergibt, daß der Verdampfungsvorgang bei Aufrechterhaltung der oberen Endtemperatur des Dampfes auch während der Zwischenphase zu einem zu scharfen Verdampfungsvorgang führen würde. Allerdings wird dabei in aller Regel die kontinuierliche oder stufenweise Druckminderung, mit der angesichts des Sättigungszustandes des Dampfes eine Minderung der Dampftemperatur einhergeht, nur bis höchstens auf einen Wert durchgeführt werden, bei der die Dampftemperatur die Ausgleichstemperatur im Innern der Formkörper nicht oder nicht wesentlich unterschreitet. Beträgt die Ausgleichstemperatur z.B. 156°C, so wird dementsprechend die Druckminderung höchstens bis auf etwa 58 bar vorgenommen werden. Dem Druck über der Zeit kann dabei jeder Kurvenverlauf vorgegeben werden, wie er zur optimalen Steuerung des Verdampfens von Wasser aus den Formlingen 6 zweckmäßig ist und ein solcher Kurvenverlauf kann grundsätzlich auch vorübergehende Druckanstiegsbereiche einschließen.

Anstelle von Wasserdampf kann man auch ein zumindest relativ trocken-gasförmiges Heizmedium einsetzen. Hierzu ist der Autoklav mit einer in den Druckbehälter 1 hineinführenden Gas-Zuleitung 24 auszustatten, die über ein Ventil 25 mit einem Gaskompressor 26 verbunden ist. Im einfachsten (dargestellten) Fall saugt dieser Gaskompressor 26 Umgebungsluft an und drückt diese in den Druckbehälter 1 ein.

Für das damit vorgesehene Härten ist es regelmäßig unnötig oder sogar unvorteilhaft, zusätzliches Wasser in den Autoklaven einzubringen, zumal die Formkörper von ihrem Formungsvorgang einige Prozent an Wasser enthalten, welches den Wasserbedarf für den physikalischchemischen Härtungsprozeß deckt.

Stattdessen wird vielmehr nach dem Schließen des Druckbehälters 1 durch Öffnen des Ventils 25 und Einschalten des Kompressors 26 Umgebungsluft in den Druckbehälter 1 eingedrückt, bis ein über das Manometer 18 ablesbarer Innendruck von z.B. 11 bar erreicht ist. Ein nachfolgendes Aufheizen des Druckbehälters auf eine Innentemperatur von ca. 200°C führt auf einen Betriebsdruck von etwa 16,5 bar. Bei diesem Druck bleibt die Verdampfungstemperatur des Wassers unterschritten. Der Feuchtegehalt der Formkörper wird nicht angetastet. Etwa sonst im Druckinnenraum befindliches Wasser behält seinen Zustand, und umgekehrt ist kein Niederschlag von Wasser an den Formkörpern in Betracht zu ziehen, da die Umgebungsluft einen in dieser Hinsicht unbeachtlichen Dampfanteil enthält. Eine nachfolgende Trocknung in einer Zwischenphase erfolgt in der vorstehenden Weise.

Anstelle von Umgebungsluft können auch sonstige geeignete Gase oder Gasgemische für das Heizmedium Anwendung finden, soweit besondere Gesichtspunkte dies zweckmäßig erscheinen lassen. Die Beheizung des Autoklaven muß nicht unmittelbar am Druckbehälter 1 erfolgen, vielmehr ist auch eine externe Beheizung möglich, indem beispielsweise in der Zuleitung 24 ein Wärmetauscher vorgesehen wird, mit dem sich das eingespeiste gasförmige Heizmedium beheizen läßt.

Zu einer externen Beheizung wird im allgemeinen sogar ein Heizmittelkreislauf vorzusehen sein mit einer Ausleitung aus dem Druckbehälter 1 und einer Einleitung, bei der ein Fördergebläse dafür sorgt, daß das Heizmedium (über den genannten Wärmetauscher) umgepumpt wird.

**Patentansprüche**

1. Verfahren zum Härten von Formkörpern aus bindemittelhaltigen Baustoffen im Innern des Druckbehälters eines Autoklaven, der mit einem gasförmigen Heizmedium beschickt wird, dessen Temperatur in einer Aufheizphase auf einen vorgegebenen oberen Endwert erhöht, in einer zumindest bis zum Erreichen einer vorbestimmten Ausgleichstemperatur im Innern der Formkörper dauernden Haltephase aufrechterhalten und in einer anschließenden Abkühlungsphase durch Druckminderung auf Ausstoßtemperatur herabgesetzt wird, dadurch gekennzeichnet, daß das Heizmedium nach Erreichen der Ausgleichstemperatur im Innern der Formkörper in einer sich an die Haltephase anschließenden und der Abkühlungsphase vorausgehenden Zwischenphase über den Ausgleich von Wärmeverlusten hinausgehend und eine Temperatur oberhalb der Verdampfungstemperatur des Wassers einnehmend beheizt und dabei durch geregeltes Abblasen von wasserdampfhaltigem Heizmedium aus dem Innern des Druckbehälters ein Ansteigen der Temperatur des Heizmediums über den vorgegebenen oberen Endwert unterbunden wird.

2. Verfahren nach Anspruch 1, dadurch gekennzeichnet, daß durch Abblasen von wasserdampfhaltigem Heizmedium der Druck im Innern des Druckbehälters auf einem konstanten, dem Sättigungsdruck zum vorgegebenen oberen Endwert der Temperatur des Dampfes entsprechenden Wert gehalten wird.

3. Verfahren nach Anspruch 1, dadurch gekennzeichnet, daß durch Abblasen von wasserdampfhaltigem Heizmedium aus dem Innern des Druckbehälters der Druck des Dampfes in der Zwischenphase stufenweise oder kontinuierlich höchstens bis auf einen Wert herabgesetzt wird, der dem Sättigungsdruck bei einer Dampftemperatur vom Wert der Ausgleichstemperatur entspricht.

4. Verfahren nach einem der Ansprüche 1 bis 3, dadurch gekennzeichnet, daß dem Innenraum des Druckbehälters Wärme ausschließlich durch Beheizung zugeführt wird.

5. Verfahren nach Anspruch 4, dadurch gekennzeichnet, daß vor oder zu Beginn der Aufheizphase eine geringe Menge Wasser zur Vorabbildung von Dampf durch die Beheizung zugeführt wird.

6. Verfahren nach einem der Ansprüche 1 bis 5, dadurch gekennzeichnet, daß das gasförmige Heizmedium dem Autoklaven vor oder während der Aufheizphase mit einem Druck und einer Temperatur, bei dem es unter der Verdampfungstemperatur des Wassers nach der Dampfdruckkurve verbleibt, zugeführt und der Druck während der Aufheizphase und der nachfolgenden Haltephase so weit erhöht bzw. aufrechterhalten wird, daß die Temperatur des Heizmediums die Verdampfungstemperatur des Wassers bei dem jeweiligen Temperatur-Druck-Zustand nicht überschreitet.

7. Verfahren nach einem der Ansprüche 1 bis 6, dadurch gekennzeichnet, daß dem Autoklaven im wesentlichen Luft als Heizmedium zugeführt wird.

8. Verfahren nach einem der Ansprüche 1 bis 7, dadurch gekennzeichnet, daß das Heizmedium bereits vor dem Aufheizen mit einem erhöhten Druck beaufschlagt wird.

9. Verfahren nach einem der Ansprüche 1 bis 8, dadurch gekennzeichnet, daß das Heizmedium im Autoklaven eingeschlossen bleibt und mittels einer Heizvorrichtung im Autoklaven aufgeheizt wird.

10. Verfahren nach einem der Ansprüche 1 bis 8, dadurch gekennzeichnet, daß das Heizmedium in einem außerhalb des Autoklaven über eine Heizvorrichtung geschlossenen Kreislauf bewegbar ist.

11. Verfahren nach einem der Ansprüche 1 bis 8, dadurch gekennzeichnet, daß das Heizmedium über eine mit einer Zuleitung verbundene Heizvorrichtung aufgeheizt wird.

**Revendications**

1. Procédé pour le durcissement d'objets moulés en matériaux de construction contenant un liant à l'intérieur de la cuve sous pression d'un autoclave qui est alimenté par un fluide chauffant gazeux dont la température augmente jusqu'à un niveau maximal prédéterminé au cours d'une phase de chauffage, se maintient jusqu'à ce que l'intérieur de l'objet moulé atteigne une température d'équilibre prédéterminée au cours d'une phase de maintien et s'abaisse jusqu'à la température d'évacuation, par détente de la pression, au cours d'une phase successive de refroidissement, caractérisé par le fait que le fluide chauffant, après avoir atteint la température d'équilibre à l'intérieur de l'objet moulé, au cours d'une phase intermédiaire consécutive à la phase de maintien et précédant la phase de refroidissement, dépasse la neutralisation des pertes caloriques et atteint une température supérieure à celle de l'évaporation de l'eau, et que l'évacuation régulée de fluide chauffant contenant de la vapeur d'eau de l'intérieur de la cuve sous pression a pour effet d'inhiber toute élévation de la température dudit fluide au-delà du niveau final maximal prédéterminé.

2. Procédé selon la revendication 1, caractérisé par le fait que par l'évacuation du fluide chauffant contenant de la vapeur d'eau, la pression qui règne à l'intérieur de la cuve sous pression est maintenue à un niveau constant, qui correspond à la pression de saturation au niveau maximal prédéterminé de la vapeur.

3. Procédé selon la revendication 1, caractérisé par le fait que par l'évacuation de fluide contenant de la vapeur d'eau de l'intérieur de la cuve sous pression, la pression de la vapeur au cours de la phase intermédiaire est abaissée graduellement ou de manière continue au maximum jusqu'à un niveau qui correspond à la pression de saturation pour une température de vapeur égale à la température d'équilibre.

4. Procédé selon l'une des revendications 1 à 3, caractérisé par le fait que l'alimentation calorique de la chambre intérieure de la cuve sous pression s'effectue exclusivement par chauffage.

5. Procédé selon la revendication 4, caractérisé par le fait qu'avant ou au début de la phase de chauffage est apportée une faible quantité d'eau en vue de la formation de vapeur par l'effet du chauffage.

6. Procédé selon l'une des revendications 1 à 5, caractérisé par le fait que le fluide chauffant gazeux est amené à l'autoclave avant ou pendant la phase de chauffage à une pression et à une température qui se maintiennent en dessous de la température d'évaporation de l'eau compte tenu de la courbe de pression de vapeur, et que la vapeur, pendant la phase de chauffage et la phase de maintien qui lui succède augmente ou est maintenue à un niveau tel que la température du fluide chauffant ne dépasse pas la température d'évaporation de l'eau dans la condition respective température-vapeur.

7. Procédé selon l'une des revendications 1 à 6, caractérisé par le fait que le fluide chauffant envoyé à l'autoclave est essentiellement de l'air.

8. Procédé selon l'une des revendications 1 à 7, caractérisé par le fait que le fluide chauffant est soumis à une pression surélevée avant même le début du chauffage.

9. Procédé selon l'une des revendications 1 à 8, caractérisé par le fait que le fluide chauffant reste enfermé dans l'autoclave et qu'il est chauffé au moyen d'un dispositif chauffant à l'intérieur de l'autoclave.

10. Procédé selon l'une des revendications 1 à 8, caractérisé par le fait que le fluide chauffant est rendu mobile à l'intérieur d'un circuit fermé par un dispositif de chauffage à l'extérieur de l'autoclave.

11. Procédé selon l'une des revendications 1 à 8, caractérisé par le fait que le fluide chauffant est chauffé par un dispositif de chauffage relié à une conduite d'arrivée.

**Claims**

1. Method for hardening moulded bodies of building materials containing a cementing agent inside the pressure vessel of an autoclave, which is oharged with a gaseous heating medium, the temperature of which is raised in a heating phase to a predetermined upper final value, maintained in a holding phase, which lasts at least until the inside of the moulded bodies reaohes a predetermined equalizing temperature, and lowered in a subsequent cooling phase by reducing the pressure to the expulsion temperature, characterised in that, after the inside of the moulded bodies has reached the equalizing temperature, the heating medium is heated in an intermediate phase, which follows the holding phase and precedes the cooling phase, beyond the degree required to compensate for heat losses and so as to reach a temperature above the evaporation temperature of the water, the temperature of the heating medium being prevented from rising above the predetermined upper final value by the controlled release of heating medium which contains water vapour from the inside of the pressure vessel.

2. Method according to claim 1, characterised in that the pressure inside the pressure vessel is maintained at a constant value, which corresponds to the saturated vapour pressure when the temperature of the steam is at the predetermined upper final value, by releasing heating medium which contains water vapour.

3. Method according to claim 1, characterised in that the pressure of the steam is reduced in steps or continuously in the intermediate phase at most to a value which corresponds to the saturated vapour pressure when the steam temperature is the same as the equalizing temperature by releasing heating medium which contains water vapour from the inside of the pressure vessel.

4. Method according to one of claims 1 to 3, characterised in that heat is supplied to the interior of the pressure vessel solely by heating.

5. Method according to claim 4, characterised in that a small amount of water is supplied before or at the beginning of the heating phase for the preliminary formation of steam by heating.

6. Method according to one of claims 1 to 5, characterised in that the gaseous heating medium is supplied to the autoclave before or during the heating phase at a pressure and a temperature at which it remains below the evaporation temperature of the water according to the steam pressure curve, and the pressure is increased to a level and maintained during the heating phase and the subsequent holding phase such that the temperature of the heating medium does not exceed the evaporation temperature of the water during the respective temperature-pressure state.

7. Method according to one of claims 1 to 6, characterised in that the heating medium supplied to the autoclave is essentially air.

8. Method according to one of claims 1 to 7, characterised in that the heating medium is subjected to an increased pressure before being heated.

9. Method according to one of claims 1 to 8, characterised in that the heating medium remains enclosed in the autoclave and is heated in the autoclave by means of a heating device.

10. Method according to one of claims 1 to 8, characterised in that the heating medium can be moved in a circuit which is closed outside of the autoclave by way of a heating device.

11. Method according to one of claims 1 to 8, characterised in that the heating medium is heated by a heating device which is connected to a feed line.